## Europäisches Patentamt

## European Patent Office

## Office européen des brevets

(11) Veröffentlichungsnummer: **0 113 049**
**B1**

(12) **EUROPÄISCHE PATENTSCHRIFT**

(45) Veröffentlichungstag der Patentschrift:
04.06.86

(51) Int. Cl.⁴: **B 01 D 59/26**

(21) Anmeldenummer: 83111896.3

(22) Anmeldetag: 28.11.83

(54) Auf dem Prinzip der Gaschromatographie arbeitende Einrichtung zum Trennen von Wasserstoffisotopen.

(30) Priorität: 30.11.82 DE 3244325

(43) Veröffentlichungstag der Anmeldung:
11.07.84 Patentblatt 84/28

(45) Bekanntmachung des Hinweises auf die Patenterteilung:
04.06.86 Patentblatt 86/23

(84) Benannte Vertragsstaaten:
CH DE FR GB IT LI SE

(56) Entgegenhaltungen:
FR - A - 1 478 542
GB - A - 825 934

Chemical Abstracts Band 98, Nr. 20, 16. Mai 1983,
Columbus, Ohio, USA H. FRISCHMUTH et al. "A pilot
plant for the recovery and separation of tritium from the
spent fuel of fusion experiments", Seite 493, linke
Spalte, Abstract Nr. 168636j
Chemical Abstracts Band 97, Nr. 10, 6. September 1982,
Columbus, Ohio, USA H. FRISCHMUTH et al.
"Separation of the hydrogen isotopes by preparative gas
chromatography", Seite 587, rechte Spalte, Abstract Nr.
81213z & Proc. Symp. Eng. Probl. Fusion Res., Band 9,
Nr.

(73) Patentinhaber: Max-Planck-Gesellschaft zur Förderung
der Wissenschaften e.V., Bunsenstrasse 10,
D-3400 Göttingen (DE)

(72) Erfinder: Frischmuth, Hans, Feldmochinger Weg 20,
D-8046 Garching (DE)
Erfinder: Perchermeier, Jürgen, Breslauer Strasse 21,
D-8046 Garching (DE)
Erfinder: Stimmelmayr, Anton, Nordring 3,
D-8051 Marzling (DE)
Erfinder: Weichselgartner, Heinrich, Dr.,
Rübezahlstrasse 43, D-8000 München 83 (DE)

(74) Vertreter: von Bezold, Dieter, Dr. et al, Patentanwälte Dr.
D. von Bezold, Dipl.-Ing. P. Schütz, Dipl.-Ing. W. Heusler
Maria-Theresia-Strasse 22 Postfach 86 02 60,
D-8000 München 86 (DE)

ACTORUM AG

## Beschreibung

Die vorliegende Erfindung betrifft eine auf dem Prinzip der Gaschromatographie arbeitende Einrichtung zum Trennen von Wasserstoffisotopen, die in einem Gasgemisch enthalten sind, mit einem Trägergasströmungsweg, der eine Förderpumpe, mindestens eine Trennsäule mit einer Packung, in der sich ein feinteiliges aktives Trennmaterial befindet, mindestens einen durch eine Ventilanordnung gesteuert einschaltbaren Auffangbehälter mit einer Packung aus Wasserstoff adsorbierendem Material sowie eine Ventilanordnung zum Steuern des Trennvorganges enthält.

Tokamak-Fusions-Experimente in der Grössenordnung von TFTR oder JET werden im Tritium-Betrieb einige tausend Curie (Ci) von als Kernbrennstoff dienendem Tritium ($T_2$) pro Tag durchsetzen. Nur ein geringer Teil dieses Tritiums wird dabei „verbrannt", der grössere Teil (über 90%) kann wieder verwendet werden. Dazu ist es aber nötig, diesen Kernbrennstoff zu reinigen und den leichten Wasserstoff sowie dessen Verbindungen, also $H_2$, HD und HT abzutrennen und die Isotope $D_2$ und $T_2$ sowie die Verbindung DT rein in grösseren Mengen (einige Normal-Liter pro Tag) wiederzugewinnen. Auch in anderen Gebieten der Technik tritt die Aufgabe auf, geringe Mengen eines bestimmten Wasserstoffisotops aus einem Überschuss eines anderen Wasserstoffisotops oder eines anderen Gases herauszuholen.

Es gibt verschiedene Verfahren zur Trennung von Wasserstoffisotopen: Die Tieftemperaturdestillation eignet sich in der Praxis nur für die Trennung grösserer Mengen von Wasserstoffisotopen; der Durchsatz praktikabler Anlagen ist um mehr als $10^3$ grösser, als es für die oben erwähnten Experimente nötig ist und das Totinventar in den Kryokolonnen liegt bei über $10^5$ Ci. Diffusionsverfahren erfordern einen hohen Aufwand, da der Trennfaktor pro Stufe bei nur etwa 2 liegt. Die bipolare Elektrolyse mit einem Trennfaktor von etwa 4 bis 8 befindet sich noch in der Entwicklung.

Die Gaschromatographie wurde für Wasserstoffisotope bisher nur für analytische Zwecke angewandt. Alle Wasserstoffisotope und ihre Verbindungen lassen sich mit geeigneten bekannten Gaschromatographie-Analysegeräten quantitativ trennen, der Durchsatz liegt jedoch nur im Bereich von nur einigen Mikrolitern bis maximal etwa $\frac{1}{10}$ Milliliter. Es ist zwar auch bereits bekannt („FUSION TECHNOLOGY" 1980, Pergamon Press Oxford und New York, S. 571 bis 577, und „ACHEMA-82 - 20. Ausstellungstagung für chemisches Apparatewesen" vom 6. bis 12. Juni 1982 in Frankfurt am Main) die Gaschromatographie in vergrössertem Massstab zur Trennung von Wasserstoffisotopen zu verwenden.

Aus GB-A-825934 ist ein Verfahren zur Abtrennung von Deuterium ($D_2$) aus einem Gemisch von $H_2$, HD und $D_2$ bekannt, das als „Verdrängungsmethode" bezeichnet wird. Die Wasserstoffisotope werden in Palladium atomar gelöst, das in einer Trennsäule als Pulver in Mischung mit Asbestfasern in einem Gewichtsverhältnis von 10:3 enthalten ist, wobei der Asbest als inerter Träger für das Metallpulver dient. Das Palladium katalysiert die Umwandlung des Moleküls HD in die Moleküle $H_2$ und $D_2$ dabei wird ständig mit $H_2$ gespült. Es handelt sich daher nicht um eine Trennung von $H_2$, HD und $D_2$, sondern praktisch um die Gewinnung von $D_2$ aus dem Gasgemisch, wobei das Molekül HD vollständig verschwindet und das ursprünglich vorhandene $H_2$ im Überschuss des $H_2$-Spülgases untergeht. Die Verdrängungsmethode kann also nur zur Anreicherung einer Komponente aus einer Mischung, nicht jedoch zur quantitativen Trennung des Ausgangsgemisches verwendet werden. Ein weiterer gravierender Nachteil besteht darin, dass das Verdrängungsgas $H_2$ nach jedem Versuch wieder desorbiert werden muss, bevor die Trennsäule wieder einsatzfähig ist.

Aus FR-A-1478542 ist ein Verfahren zur Trennung von Wasserstoffisotopen durch Gegenstromanreicherung bekannt, wobei mit bewegten Adsorptionsschichten und einem Verdrängungsgas (z.B. $N_2$) gearbeitet wird.

Aus US-A-2863526 ist ein fraktionierendes Anreicherungsverfahren zur Trennung von Wasserstoffisotopen bekannt, bei dem die Wasserstoffisotope bei Raumtemperatur in Palladium sorbiert und anschliessend bei erhöhter Temperatur wieder desorbiert werden. Bei der Sorption werden Palladium-Betten verwendet, in denen das Palladium mit Quarzsand vermischt ist. Das bei chromatographischen Verfahren erhebliche Problem der sogenannten Peak-Unschärfe tritt bei diesem Verfahren nicht auf.

Der vorliegenden Erfindung liegt die Aufgabe zugrunde, eine auf dem Prinzip der Gaschromatographie arbeitende Einrichtung zur Trennung von Wasserstoffisotopen und deren Verbindungen anzugeben, die auch grössere Probenchargen mit hohem Trennfaktor zu trennen gestattet, und/oder die in der Lage ist, die getrennten Isotope und deren Verbindungen zu speichern, so dass die Sammlung eines speziellen Isotops aus möglichst vielen der chargenweise ablaufenden Trennzyklen optimiert wird.

Die in den Ansprüchen gekennzeichnete Erfindung löst die Aufgabe, grössere Probenchargen mit hohem Trennfaktor zu trennen (Teilaufgabe I), durch eine spezielle Trennsäulen-Packung, die feinteiliges nichtmetallisches aktives Trennmaterial, insbesondere Gamma-Aluminiumoxid, dem ein kleiner Prozentsatz, insbesondere höchstens 5 Gew.%, insbesondere 1 bis 2 Gew.% inerte faserförmige Füllkörper wie Siliciumoxidfasern beigemischt sind, enthält und dadurch sehr dicht und gleichmässig gepackt werden kann, so dass eine effektive gaschromatographische Trennung mit scharf definierten „Peaks" gewährleistet ist.

Dadurch, dass die Auffangbehälter-Packung Füllkörper enthält, die eine höhere Wärmeleitfähigkeit als das wasserstoffadsorbierende pulverförmige Material haben, wird einerseits eine Kanalbildung und ein Zusammenbacken des adsorbierenden Materials weitgehend verhindert und ausserdem wird eine gleichmässige Beladung des adsorbierenden Materials mit Wasserstoff erreicht.

Dadurch wird die Aufgabe gelöst, die Sammlung eines speziellen Isotops aus möglichst vielen der chargenweise ablaufenden Trennzyklen (Teilaufgabe II) zu optimieren.

Dadurch, dass die Trennsäule ausser der aktiven Substanz, vorzugsweise Aluminiumoxid, noch zusätzlich inaktive faserförmige Füllkörper in einem Anteil von höchstens 5 Gew.%, vorzugsweise nur etwa 0,5 bis 2 Gew.% enthält, wird nämlich ein gleichmässiger Durchsatz über den ganzen Querschnitt der Trennsäule erreicht und eine Kanalbildung vermieden. Es lassen sich chargenweise jeweils etwa 500 Milliliter einer Mischung von Wasserstoffisotopen trennen, wobei eine weitestgehende (über 99,9%) Trennung von $D_2$, DT und $T_2$ bei einem wöchentlichen Durchsatz ab etwa 25 Normal-Liter bzw. einigen $10^4$ Ci $T_2$ gewährleistet ist. Damit steht eine einfache Möglichkeit zur quantitativen Wiederverwendung des „Fusionsbrennstoffes" DT und $T_2$ zur Verfügung. Durch entsprechende Massnahmen bei den Adsorptionsvorrichtungen, und zwar die Verwendung von relativ groben Füllkörpern, welche aus einem Material ausreichender Wärmeleitfähigkeit bestehen, z.B. Edelstahl, lässt sich eine sehr weitgehende Adsorption gewünschter, getrennter Isotopenspezies aus mehreren aufeinanderfolgenden Trennprozessen erreichen.

Die vorliegende Einrichtung lässt sich generell zum Reinigen, Trennen, Anreichern und Speichern von Wasserstoffisotopen verwenden, z.B. zum Gewinnen von Wasserstoffisotopen, die einem anderen Gas, z.B. einem Inertgas oder einem anderen Wasserstoffisotop in kleinen Anteilen beigemischt ist.

Im folgenden werden Ausführungsbeispiele der Erfindung unter Bezugnahme auf die Zeichnung näher erläutert.

Es zeigen:

Fig. 1 eine schematische Darstellung einer auf dem Prinzip der Gaschromatographie arbeitenden Einrichtung zum Trennen von Wasserstoffisotopen und deren Verbindungen, bei der die Erfindung Anwendung finden kann;

Fig. 1a einen Teil der Einrichtung gem. Fig. 1, und

Fig. 2 eine schematische Schnittdarstellung einer Vorrichtung zum Adsorbieren eines getrennten Isotops.

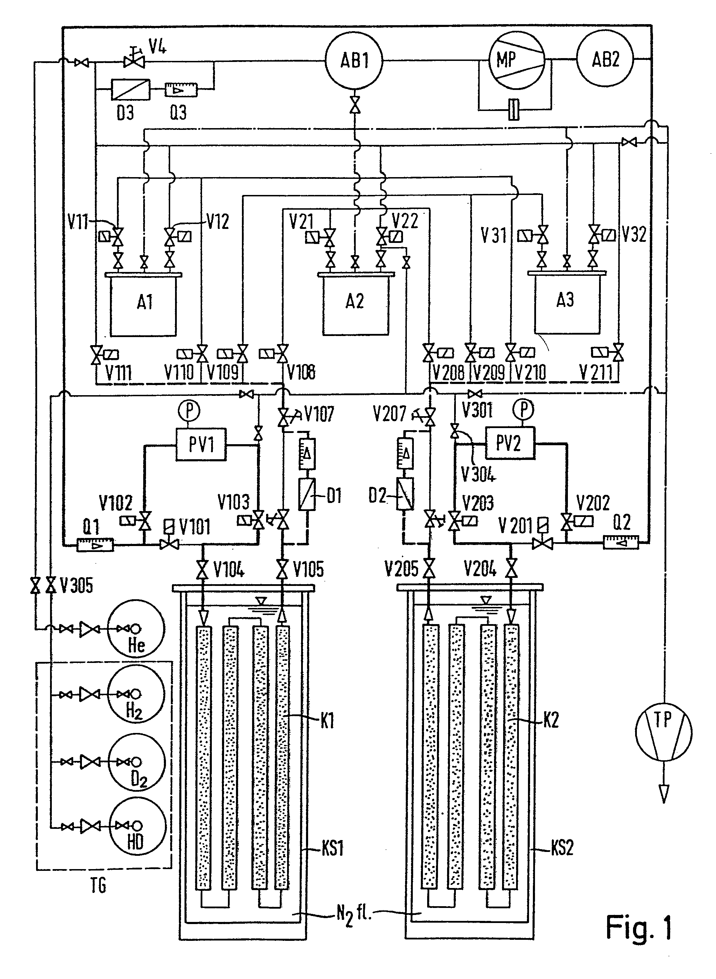

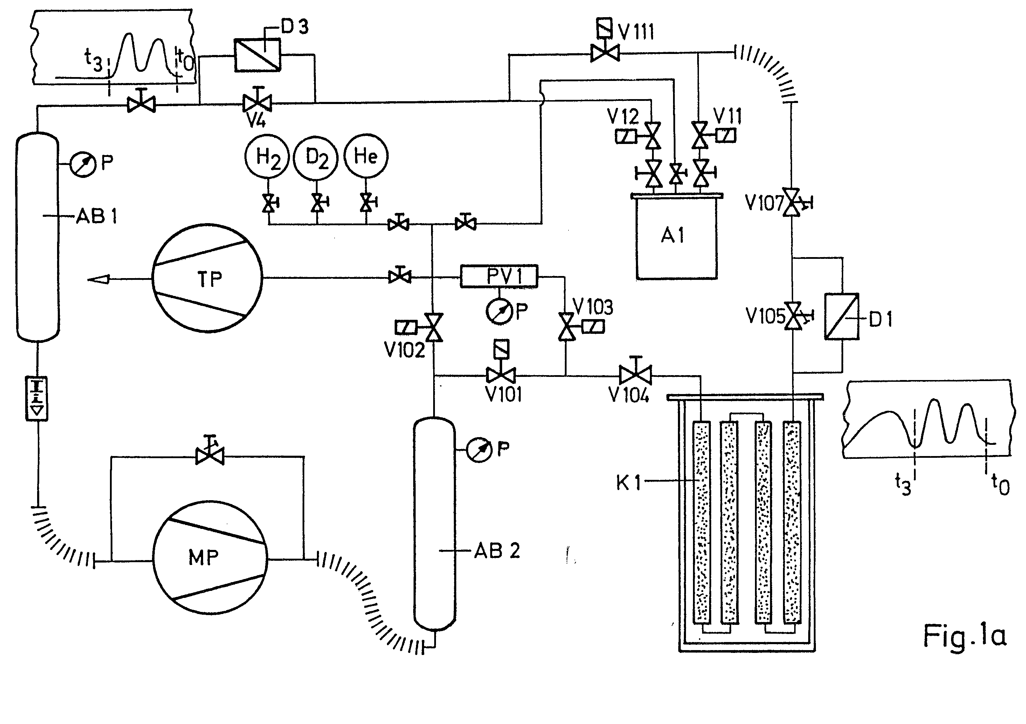

Ein Ausführungsbeispiel einer auf dem Prinzip der Gaschromatographie arbeitenden bevorzugten Einrichtung zur Trennung von Wasserstoffisotopen und deren Verbindungen ist in Fig. 1 dargestellt. Fig. 1a zeigt zur Erleichterung der Übersicht einen bei einem Trennvorgang aktiven Teil dieser Einrichtung. Die dargestellte Einrichtung enthält einen Kreislauf für ein Trägergas, insbesondere Helium. Der Trägergaskreislauf enthält einen Membrankompressor MP, dem ein Puffervolumen AB1 vorgeschaltet und ein zweites Puffervolumen AB2 nachgeschaltet ist. Die Puffervolumina dienen dazu, Druckstösse zu glätten, die bei Einführung des zu trennenden Gasgemisches und bei der Umschaltung von Ventilen sonst auftreten könnten.

Vom Auslass des Puffervolumens AB2 verzweigt sich der Trägergasströmungsweg in zwei wahlweise einschaltbare Zweige, die jeweils einen Strömungsmesser Q1 bzw. Q2, ein Probenvolumen PV1 bzw. PV2, eine Trennkolonne K1 bzw. K2 und einen Wasserstoffisotopendetektor D1 bzw. D2 sowie eine Anzahl von Ventilen sowie Überbrückungsleitungen enthalten, deren Anordnung aus Fig. 1 und 1a ersichtlich ist und auf deren Funktion weiter unten noch eingegangen wird.

Von der Auslassseite der Detektoren D1 bzw. D2 führt der Trägergaskreislauf über eine weitere Ventilanordnung zu einem von drei wahlweise einschaltbaren Auffangbehältern A1, A2 und A3. Vom Auslass des eingeschalteten Auffangbehälters führt der Trägergaskreislauf über einen weiteren Wasserstoffisotopen-Detektor D3 und einen weiteren Strömungsmesser Q3 zur Einlassseite des Puffervolumens AB1.

An verschiedenen Stellen sind ferner, wie ersichtlich, Druckmesser P angeordnet. Zur Versorgung der Anlage mit Trägergas und zur Füllung der Probenvolumina PV mit einer Testgasmischung sind vier Gasbehälter TG vorgesehen, die Helium, $H_2$, $D_2$ bzw. HD enthalten und über Druckminderventile und Absperrventile in der dargestellten Weise mit der Anlage verbunden sind. Zum Evakuieren der Anlage und zum Abpumpen der abgetrennten Isotope ist eine weitere Pumpe TP vorgesehen.

Der tritiumdichte Doppelmembrankompressor MP pumpt den Trägergastrom mit einem Durchsatz von z.B. 10 l/min ständig um. Über das kalibrierte Probenvolumen PV1 oder PV2 wird eine vorgegebene Menge des zu trennenden Gasgemisches, das bezüglich der Wasserstoffisotope beliebig zusammengesetzt sein kann, in das zirkulierende Trägergas, das vorzugsweise aus hochgereinigtem (etwa 99,999% reinem) Helium besteht, in einem einzigen „Puls", d.h. als möglichst kompakter Gaspfropfen injiziert. Dieser Puls oder Gaspfropfen gelangt nun aus dem Probenvolumen PV1 oder PV2 mit dem Trägergasstrom über den dick gezeichneten Leitungsweg in die eigentliche Trennkolonne K1 oder K2. Jede Trennkolonne besteht z.B. aus vier Teilstücken, die miteinander in Reihe geschaltet sind und jeweils einen Mantel 12 aus einem Kupferrohr mit einer Wandstärke von 2 mm, einem Innendurchmesser von 50 Millimeter und einer Länge von 750 mm enthalten. Insgesamt ist jede Trennkolonne K also 3000 mm lang. Die Füllung der Trennkolonnen besteht aus vorbehandeltem $Al_2O_3$-Pulver 14 mit einem Zusatz von etwa 0,5 bis 1 Gew.% an Füllkörpern in Form kurzer Siliciumdioxidfaserstückchen und jede Kolonne ist in einem Kryostaten KS1 bzw. KS2 untergebracht, der mit flüssigem Stickstoff gefüllt ist. Der Gasdruck in der Trennkolonne liegt vorzugsweise über dem Atmosphärendruck und kann z.B 2 bis 5 bar, insbesondere 3 bar, betragen.

In der eingeschalteten Kolonne K1 oder K2 erfolgt nun die Trennung der einzelnen Wasserstoffisotope und Wasserstoffisotopverbindungen aufgrund von aufeinanderfolgenden Adsorptionsund Desorptionsvorgängen, die an der Grenzschicht zwischen der Aluminiumoxidfüllung und dem Trägergasstrom ablaufen.

Nach dem Verlassen der Kolonne werden die aufgetrennten Spezies mittels des gas- bzw. tritiumdicht ausgeführten Helium-Ionisationsdetektor D1 bzw. D2 registriert. Man kann nun, je nach Bedarf, das eine oder andere oder alle aufeinanderfolgenden Isotope oder Isotopenverbindungen einzeln aus dem Trägergasstrom „herausschneiden". Die hierzu verwendeten Auffangbehälter A1 bis A3 bestehen vorzugsweise aus Edelstahl und sind mit einem reaktiven Metall oder einer reaktiven Metallegierung gefüllt, die Wasserstoff in ausreichenden Mengen und mit ausreichender Geschwindigkeit zu adsorbieren vermögen. Der für die Adsorption eines bestimmten Isotops vorgesehene Auffangbehälter wird durch entsprechend betätigte Ventile gerade dann in den Trägergasstrom eingeschaltet, wenn das gewünschte Isotop oder die gewünschte Verbindung die Trennkolonne verlässt. Die Ventile können automatisch durch das Detektorsignal oder entsprechend der Trennzeit, die für jedes Isotop und jede Verbindung charakteristisch und konstant ist, betätigt werden.

In Fig. 1 ist der Strömungsweg des aus der Kolonne K1 bzw. K2 austretenden, die getrennten Spezies enthaltenden Trägergasstromes bis zu den Ventilen, die den Trägergasstrom zu einem gewünschten Auffangbehälter zu leiten gestatten, gestrichelt dargestellt. Bei der Anlage gemäss Fig. 1 sind drei Auffangbehälter A1, A2, A3 dargestellt, welche durch die dargestellte Ventilanordnung wahlweise in einen der Trägergasströme eingeschaltet werden können.

Der Trägergasstrom hinter dem jeweils eingeschalteten Auffangbehälter angeordnete weitere Detektor D3 dient zur Kontrolle und wird bei einwandfreiem Arbeiten der Anlage das im Auffangbehälter adsorbierte aufgefangene Isotop nicht mehr registrieren. Vom Detektor D3 strömt das Trägergas dann über AB1 zurück zum Membrankompressor MP.

Da das Probenvolumen etwa auf den Faktor $10^4$ grösser ist als bei herkömmlichen Gaschromatographie-Trennverfahren, muss besonderes Augenmerk auf diejenigen Verfahrensparameter gerichtet werden, welche die Probenmenge direkt beeinflussen. Es sind dies:

*Der Kolonnenquerschnitt:* Mit zunehmendem Querschnitt der stationären Phase, also des Querschnitts der Trennkolonne, kann das Probenvolumen erhöht werden, gleichzeitig wird aber der Trennungswirkungsgrad beeinflusst. Kreisförmige Querschnitte mit einem Durchmesser von ca. 40 bis 60 mm, insbesondere 50 mm, haben sich bewährt.

*Die Länge der Kolonne:* Mit zunehmender Länge der Kolonne steigt zwar die Trennleistung an, aber gleichzeitig auch die Trennzeit. Die Gesamtlänge der Kolonne kann z.B. 2000 bis 5000 mm betragen, 3000 mm haben sich gut bewährt.

*Die Trägergasgeschwindigkeit:* Eine Erhöhung der Trägergasgeschwindigkeit verkürzt die Trennzeit, aber auch die Trennleistung. Ein Wert in der Grössenordnung von 10 l/min hat sich bei der beschriebenen Ausführungsform als zufriedenstellend erwiesen.

*Das Trennmaterial:* Das aktive Trennmaterial, also die stationäre Phase in der Trennsäule ist ein nichtmetallisches, nicht katalytisch wirkendes teilchenförmiges Material, das sowohl aus speziellen Molekularsieben (Zeolithen), aus porösen Polymeren, aus aktiven Kohlen oder aus komplexpolymeren Molekularsieben sowie aus speziell vorbehandelten Aluminiumoxiden bestehen kann. Es hat einen entscheidenden Einfluss sowohl auf das Probenvolumen als auch auf die Trennleistung. Als bevorzugtes Material hat sich handelsübliches, jedoch in spezieller Weise nachbehandeltes Gamma-$Al_2O_3$ bewährt, das vorzugsweise eine Körnung von etwa 60 bis 210 µm hat. Die Kornverteilung entspricht einer Gauss'schen Verteilung, deren Maximum ($\sim 70\%$) bei ca. 140 µm liegt.

Die Trennaktivität des Aluminiumoxids, die mit dessen Polarität beschrieben werden kann, hängt vom Wassergehalt ab und äussert sich im Chromatogramm in der Form der Peaks. Wenn die Trennsubstanz vollständig wasserfrei ist, steigt die Rückhaltezeit der einzelnen Spezies stark an, die Säule ist also zu aktiv und hält die Moleküle zu stark zurück, was unerwünscht lange Chargen-Trennzeiten zur Folge hat.

Um eine Querdiffusion in der Füllung, Anreicherungen bzw. „Nester" durch Hohlräume, Konzentrationsverschiebungen aufgrund von unterschiedlicher Packungsdichte und ähnliche Störeinflüsse wirksam zu verhindern, muss die Füllung gleichmässig sowohl über den Säulenquerschnitt als auch über die Säulenlänge gepackt werden. Geschieht das zu fest, so resultiert ein zu hoher Trägergasdruck und als Folge davon ebenfalls längere Trennzeiten.

Diese Probleme werden (Teilaufgabe I) durch einen Zusatz von höchstens 5 Gew.%, insbesondere weniger als 3 Gew.%, vorzugsweise etwa 0,5 bis 1 Gew.% an inerten faserförmigen Füllkörpern, vorzugsweise $SiO_2$-Fasern 16 gelöst, die vorzugsweise einen mittleren Durchmesser von 0,1 mm und eine mittlere Länge von 2 mm haben. Dieser Zusatz macht es möglich, das Aluminiumoxid mit mässigem Druck gleichmässig in der Packung zu verteilen. Ferner wird die Aktivität des Aluminiumoxids dadurch optimiert, dass man den Wassergehalt des Aluminiumoxids auf etwa 1% einstellt, was bei dem beschriebenen Ausführungsbeispiel dadurch geschehen kann, dass die mit handelsüblichen Gamma-Aluminiumoxid der angegebenen Körnung und den $SiO_2$-Fasern gefüllte Trennkolonne 72 Stunden bei 410° C im Heliumstrom (ca. 50 l/min) ausgeheizt wird. Die oben erwähnten Störungen werden dadurch vermieden und das Probenvolumen kann entscheidend erhöht werden.

*Die Temperatur des Trennmaterials:* Um Wasserstoffisotope zu trennen, ist es im allgemeinen erforderlich, die Trennkolonne zu kühlen, z.B. auf die Temperatur des flüssigen Stickstoffs (ca. 77 K). Dabei ist darauf zu achten, dass die Temperatur über den Säulenquerschnitt möglichst gleich ist, insbesondere muss die mit dem Trägergasstrom zugeführte Wärme schnell über die Wände der Kolonne abgeführt werden. Es wird daher für die Kolonne ein Wandmaterial hoher Wärmeleitfähigkeit, insbesondere Kupfer verwendet.

*Die Detektoren:* Zum Nachweis der getrennten Isotope wurden Ionisationsdetektoren verwendet. Die handelsüblichen He-Ionisationsdetektoren sind jedoch weder hochvakuum- noch diffusionsdicht. Der eigentliche Detektor wurde daher in einem tritiumdichten Edelstahlgehäuse mit ultrahochvakuumdichten Hochspannungsdurchführungen angeordnet.

*Auffang- bzw. Sammelbehälter:* Es ist bekannt, dass beispielsweise Uran in pyrophorer Form oder die Legierung Zr/Al in kaltem Zustand grosse Mengen an Wasserstoff aufzunehmen vermögen, z.B. im Falle von Uran unter Bildung der Verbindung $UH_3$. Das Verfahren, Wasserstoff durch Metalle oder Metallegierungen zu binden, wurde bisher jedoch lediglich im stationären Betrieb angewandt, d.h. der Wasserstoff wird in ein das betreffende Metall enthaltendes Gefäss gebracht, und es wird abgewartet, bis die dem angewandten Druck und der angewandten Temperatur entsprechende Menge an Wasserstoff gebunden ist. Ein solches Verfahren ist jedoch für die beschriebene Trennanlage nicht anwendbar, da die Wasserstoffisotope bei einem Druck bis zu 3 bar und einer Trägergasgeschwindigkeit von ungefähr 10 l/min aus dem relativ schnell strömenden Helium möglichst vollständig herausgeholt werden müssen. Bei einem Volumen des Sammelbehälters von 0,5 Liter resultiert bei der genannten Strömungsgeschwindigkeit ein zwanzigfacher Gaswechsel pro Minute.

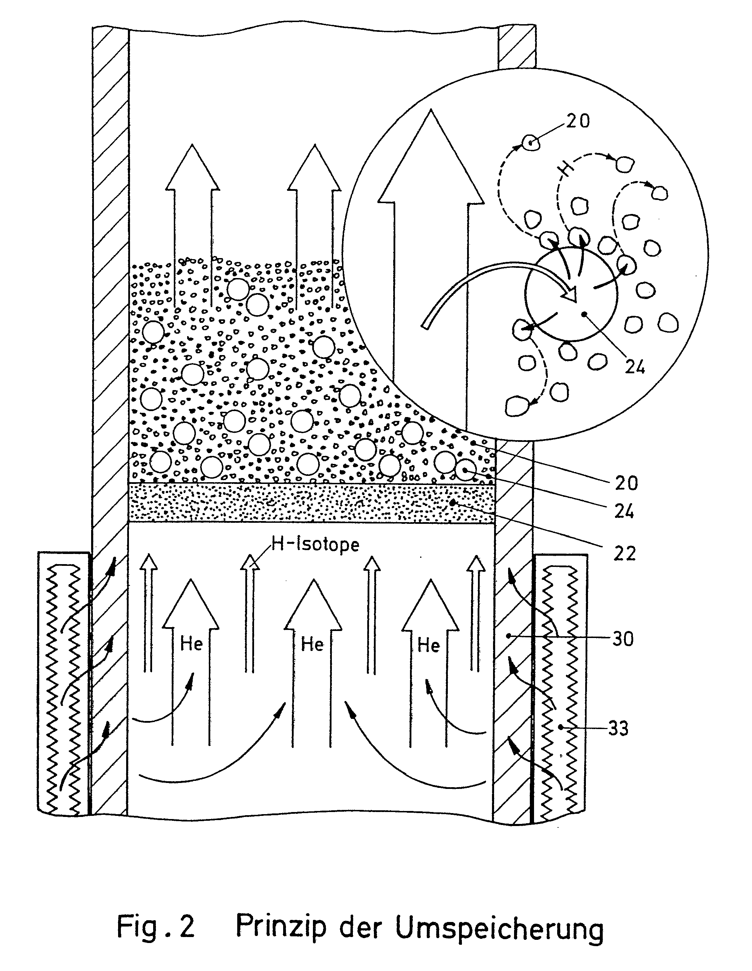

Bei einer bevorzugten Ausführung der Auffang- bzw. Sammelbehälter A1 bis A3 wurden jeweils 600 g pyrophores Uranpulver 20 in drei Etagen lose über dicht mit dem Gehäuse verschweisste Fritten aus nichtrostendem Stahl angeordnet, wie in Fig. 2 für eine Fritte 22 stark vergrössert und schematisch dargestellt ist. Wegen der relativ hohen Strömungsgeschwindigkeit des die Wasserstoffisotope enthaltenden Trägergasstromes im Uranpulver, wegen lokalen Überhitzungen bei der Wasserstoffaufnahme und wegen teilweiser Sinterung des pulverförmigen Urans besteht die Gefahr einer Kanalbildung in der Uranpulvermasse. Um dies zu verhindern, werden (Teilaufgabe II) dem Uranpulver 20 Kugeln 24 aus nichtrostendem Stahl mit einem Durchmesser von beispielsweise 2,5 mm z.B. im Volumenverhältnis 3:1 (Uranpulver zu Edelstahlkugeln) beigemengt, die eine bessere Wärmeleitfähigkeit als das Uranpulver haben und die im Uranpulver 20 entstehende Wärme an die aus gut wärmeleitendem Material bestehende Gefässwand 30 abtransportieren sowie auch einem Zusammensintern entgegenwirken. Anstelle der Kugeln aus nichtrostendem Stahl oder zusätzlich zu diesen haben sich auch wendel- oder spiralförmige Bimetallfedern als inerte Zusatzkörper in der Uranpulverpackung bewährt, weil diese bei Temperaturänderungen durch ständiges Auf- und Einrollen das Uranpulver lockern und ein Zusammenbacken sowie eine Kanalbildung verhindern.

Die dichte Verschweissung der Fritten 22 mit der Wand 30 des Auffangbehälters und eine entsprechend dichte Verschweissung der Gaseinleit- und Auslassleitungen sowie der Behälter gewährleisten, dass Spalte, durch welche aufgrund der hohen Trägergasgeschwindigkeit Verluste auftreten könnten, zuverlässig vermieden werden.

Eine weitere, wichtige Aufgabe der Auffang- und Sammelbehälter mit z.B. pyrophorem Uran als Speichermetall ist die Sammlung eines speziellen Isotops aus möglichst vielen der chargenweise ablaufenden Trennzyklen. Wenn die beschriebene Trennanlage beispielsweise an einem Fusionsexperiment eingesetzt wird, soll das Tritium aus dem verbrauchten Brennstoff möglichst vieler Einzelversuche getrennt und aufgesammelt werden. Praktikabel erscheint z.B. eine Woche Experimentierzeit, so dass einige zehn Liter Speicherkapazität notwendig sind. Die theoretische Belastbarkeit von 600 g Uran beträgt etwa $25 \times 10^4$ Ci Tritium. Beim Sorptionsvorgang aus dem rasch strömenden Helium-Trägergas wird das Isotop zunächst in die Randschichten der Uranteilchen-Agglomerate eingebaut, die sich dabei verhältnismässig rasch sättigen. Es muss also dafür gesorgt werden, dass diese Randschichtbeladung ins Innere transportiert wird, d.h. dass eine möglichst homogene „Masse"-Beladung des gesamten reaktionsfähigen Metalls erfolgt. Diese Beladungsumlagerung wird durch Anwendung von Temperaturgradienten erzielt, d.h. die Randzonen werden kurzfristig aufgeheizt, wobei das Innere der Uran-Agglomerate kühler bleibt, so dass die Wasserstoffisotope von den Randzonen nach innen wandern. Die Ausbildung dieses Temperaturgradienten wird von den eingelagerten Zusatzkörpern, insbesondere Edelstahlkugeln, unterstützt. Beim kurzfristigen Aufheizen der Gefässwand 30 auf etwa 270° bis 275° C mittels eines aussen angebrachten, z.B. elektrisch betriebenen Heizmantels 33 wird das aus dem gut wärmeleitfähigen Helium bestehende Trägergas erwärmt, das seine Wärme zumindest zum Teil auf die Edelstahlkugeln überträgt. Diese geben dann ihrerseits die Wärme an das an den Kugeln anliegende, lockere Uranpulver ab und bewirken so eine der Temperatur entsprechende Wasserstoff-Freisetzung. Da das pyrophore Uran Wärme schlecht leitet, bleibt das Innere von Agglomeraten kälter, so dass das betreffende Wasserstoffisotop entsprechend dem Wasserstoffdissoziationsdruck dort aufgenommen wird, wie in Fig. 2 im Kreis stark vergrössert und schematisch dargestellt ist. Auf diese Weise kann die Wasserstoff-Beladung des sorptionsfähigen Metalls gleichmässig verteilt und die Aufnahmekapazität des Sammelbehälters gesteigert werden.

Mit einem solchen Auffangbehälter und/oder der oben beschriebenen Packung ist es möglich, bis zu mehrere hundert Milliliter Wasserstoffisotope vollständig aus dem Gasstrom zu sorbieren.

Das beschriebene Ausführungsbeispiel lässt sich selbstverständlich in der verschiedensten Weise abwandeln. Die Edelstahlkugeln können einen Durchmesser von z.B. zwischen 2 und 3 mm oder auch ausserhalb dieses Bereiches haben, und es kann auch ein anderes Volumenverhältnis als 3:1 des aktiven sorbierenden Metallpulvers und der Edelstahlkugeln bzw. anderen Zusatzkörper verwendet werden, z.B. 1:1. Im allgemeinen sollen sich die Zusatzkörper jedoch im wesentlichen nicht berühren.

Bei der Trennkolonne kann man auch andere Materialien als das erwähnte Gamma-Aluminiumoxid benutzen. Bei Verwendung von Gamma-Aluminiumoxid ist der Wassergehalt vorzugsweise 1 Gewichtsprozent, er kann hiervon jedoch auch abweichen, und z.B. zwischen 0,5 und 2,5% liegen. Die zugesetzten faserförmigen Siliziumdioxid-Körper können auch andere Längen und Durchmesser, z.B. Längen zwischen 1 und 3 mm und mittlere Durchmesser zwischen 0,5 und 0,3 mm haben und der Anteil dieser Füllkörper kann auch bis zu 2,5 Gewichtsprozent oder in Ausnahmefällen bis etwa 5 Gewichtsprozent des Aluminiumoxids gesteigert werden. Die oben bei der Beschreibung des Ausführungsbeispiels angegebenen Werte und Parameter werden jedoch bevorzugt.

Beim Betrieb der in Fig. 1 dargestellten Anlage kann die Umschaltung der Ventile durch eine nicht dargestellte Programmsteuerung in Verbindung mit einer Zeitsteuerung bzw. den Detektorausgangssignalen für die Selektion der einzelnen getrennten Isotope erfolgen.

Bei der Inbetriebnahme der Anlage wird diese zuerst evakuiert und ausgeheizt und dann mit Helium durchgespült. Dann wird der Membrankompressor MP in Betrieb gesetzt, der Helium-Trägergasstrom umgepumpt und die für die Trennung vorgesehenen Betriebsparameter, wie z.B. die Kolonnentemperatur, eingestellt.

Während dieses Wartezustandes sind beispielsweise die Ventile V101, V104, V105, V107 und V111 geöffnet, alle anderen Ventile geschlossen, so dass das Trägergas vom Membrankompressor MP durch die Kolonne K1 und die Detektoren D1 und D3 umgepumpt wird. Das Probenvolumen PV1 kann durch die Pumpe TP über die Leitungen mit den geöffneten Ventilen V301, V302 und V303 evakuiert werden, wobei die Ventile V304 und V305 geschlossen sind. Anschliessend wird das Ventil V301 geschlossen und das zu trennende Isotopengemisch von einem Vorrat, der bei dem Ausführungsbeispiel gemäss Fig. 1 durch die in dem gestrichelten Rechteck enthaltenen Behälter TG gebildet wird, eingespeist. Dann werden die Ventile V302 und V305 geschlossen. Die Anlage ist nun für einen Trennvorgang betriebsbereit.

Zur Einleitung eines Trennvorganges wird das Ventil V101 geschlossen und gleichzeitig werden die Ventile V102 und V103 geöffnet, so dass das Trägergas nun das im Probenvolumen PV1 enthaltene, zu trennende Isotopengemisch als kompakten Puls oder Pfropfen in die Trennkolonne K1 mitnimmt. Nach einer gewissen, bei vorgegebenen Betriebsbedingungen und Apparaturparametern von Charge zu Charge konstanten Zeit wird dann das erste Wasserstoffisotop am Ausgang der Kolonne K1 erscheinen, so dass der Detektor D1 anspricht. Nun wird der für die Sorption und das Sammeln des betreffenden Isotops vorgesehene Auffangbehälter, z.B. der Auffangbehälter A1 in den Trägergasstrom eingeschaltet, was entweder durch eine zeitabhängige Steuerung oder durch das Ausgangssignal des Detektors D1 in nicht näher dargestellter Weise erfolgen kann. Zum Einschalten des Auffangbehälters A1 wird das Ventil V111 geschlossen und das Ventil V110 sowie Ventile V11 und V12 geöffnet, so dass der Gasstrom nun durch den Auffangbehälter A1 zum Detektor D3 strömt, wo das betreffende Isotop nun sorbiert und aus dem Trägergasstrom entfernt wird. Nach einer bestimmten Zeitspanne oder unter Steuerung durch das Ausgangssignal des Detektors D1 wird der Gasstrom dann auf den nächsten Auffangbehälter A2 umgeschaltet, um das nächste Isotop oder Isotopengemisch aus dem Trägergasstrom zu entfernen und zu sammeln. Hierzu werden die Ventile V110, V11 sowie V12 geschlossen und dafür das Ventil V108 sowie Ventile V21 und V22 geöffnet, so dass der Gasstrom nun durch den Auffangbehälter A2 strömt.

In entsprechender Weise kann der Auffangbehälter A3 über das Ventil V109 und Ventile V31 sowie V32 eingeschaltet werden. Wenn mehr als 3 Isotope oder Isotopengemische abzuscheiden sind, werden entsprechend mehr Auffangbehälter und Ventilanordnungen vorgesehen.

Während die Trennung unter Verwendung der Kolonne K1 abläuft, kann das Probenvolumen PV2 in analoger Weise zur Vorbereitung eines nachfolgenden Trennvorganges unter Verwendung der Kolonne K2 gefüllt werden. Die nächste Charge kann dann in ganz analoger Weise mittels der Kolonne K2 unter Verwendung der dieser zugeordneten Ventilanordnung getrennt werden, wie aus der obigen Beschreibung ohne weiteres ersichtlich sein dürfte.

## Patentansprüche

1. Auf dem Prinzip der Gaschromatographie arbeitende Einrichtung zum Trennen von Wasserstoffisotopen, die in einem Gasgemisch enthalten sind, mit einem Trägergasströmungsweg, der eine Förderpumpe (MP), mindestens eine Trennsäule (K1) mit einer Packung, in der sich ein feinteiliges aktives Trennmaterial befindet, mindestens einen durch eine Ventilanordnung gesteuert einschaltbaren Auffangbehälter (A1) mit einer Packung aus Wasserstoff adsorbierendem Material sowie eine Ventilanordnung zum Steuern des Trennvorganges enthält, dadurch gekennzeichnet, dass die Trennsäulen-Packung ein feinteiliges nichtmetallisches Trennmaterial enthält, in dem inerte, faserförmige Füllkörper in einer Menge von höchstens 5 Gew.% gleichmässig verteilt sind und/oder dass die Auffangbehälter-Packung ausser dem wasserstoffadsorbierenden Material noch Füllkörper aus gut wärmeleitendem Material enthält.

2. Einrichtung nach Anspruch 1, dadurch gekennzeichnet, dass die Fasern aus Siliciumdioxid bestehen.

3. Einrichtung nach Anspruch 1 oder 2, dadurch gekennzeichnet, dass das aktive Trennmaterial Aluminiumoxid ist.

4. Einrichtung nach Anspruch 3, dadurch gekennzeichnet, dass das aktive Trennmaterial Gamma-Aluminiumoxid mit einem Wassergehalt von etwa 1 Gew.% ist.

5. Einrichtung nach einem der Ansprüche 1 bis 4, dadurch gekennzeichnet, dass die Fasern einen mittleren Durchmesser von etwa 0,1 mm und eine mittlere Länge von 2 mm haben und dass das Trennmaterial aus Teilchen mit einer Grösse zwischen 60 und 210 µm besteht.

6. Einrichtung nach einem der Ansprüche 1 bis 5, dadurch gekennzeichnet, dass der Anteil der Fasern 0,5 bis 2 Gew.% des Trennmaterials beträgt.

7. Einrichtung nach einem der Ansprüche 1 bis 6, dadurch gekennzeichnet, dass das Trennmaterial in einem Kupferrohr untergebracht ist.

8. Einrichtung nach Anspruch 1 oder 7, dadurch gekennzeichnet, dass das Trennmaterial in einem Rohr mit einem Durchmesser von etwa 50 mm untergebracht ist.

9. Einrichtung nach einem der vorhergehenden Ansprüche, dadurch gekennzeichnet, dass die Packung des Auffangbehälters (A1) pulverförmiges pyrophores Uran als adsorbierendes Material und gröbere Körper aus einem gut wärmeleitenden Material als Füllkörper enthält.

10. Einrichtung nach Anspruch 1 oder 9, dadurch gekennzeichnet, dass die Packung des Auffangbehälters kugelförmige Füllkörper enthält.

11. Einrichtung nach Anspruch 10, dadurch gekennzeichnet, dass die kugelförmigen Füllkörper aus nichtrostendem Stahl bestehen.

12. Einrichtung nach Anspruch 1 oder 9, dadurch gekennzeichnet, dass die Packung des Auffangbehälters Bimetall-Füllkörper enthält.

13. Einrichtung nach Anspruch 12, dadurch gekennzeichnet, dass die Bimetall-Füllkörper die Form von Spiralen oder Wendeln haben.

14. Einrichtung nach einem der vorhergehenden Ansprüche, dadurch gekennzeichnet, dass der Auffangbehälter mit einer Heizvorrichtung versehen ist.

## Claims

1. Apparatus operating on the gas chromatography principle for separating hydrogen isotopes contained in a gas mixture having a carrier gas flow path which includes a transfer pump (MT), at least one separating column (K1) with a filling in which there is a finely divided active separating material, at least one collecting container (A1) which may be controllably actuated by a valve arrangement and has a filling of hydrogen-adsorbent material and a valve arrangement for controlling the separating process, characterised in that the separating column filling includes a finely divided non-metallic separating material in which inert fibrous filling bodies are uniformly distributed in an amount of at most 5% by wt. and/or that the collecting container filling contains filling bodies of good thermally-conducting material in addition to the hydrogen-adsorbent material.

2. Apparatus as claimed in claim 1, characterised in that the fibres comprise silicon dioxide.

3. Apparatus as claimed in claim 1 or 2, characterised in that the active separating material is aluminium oxide.

4. Apparatus as claimed in claim 3, characterised in that the active separating material is gamma-aluminium oxide with a water content of about 1% by wt.

6. Apparatus as claimed in one of claims 1 to 4, characterised in that the fibres have a mean diameter of about 0.1 mm and a mean length of 2 mm and that the separating material comprises particles with a size between 60 and 210 µm.

6. Apparatus as claimed in one of claims 1 to 5, characterised in that the proportion of the fibres is 0.5 to 2% by wt. of the separating material.

7. Apparatus as claimed in one of claims 1 to 6, characterised in that the separating material is accommodated in a copper tube.

8. Apparatus as claimed in claim 1 or 7, characterised in that the separating material is accommodated in a tube with a diameter of about 50 mm.

9. Apparatus as claimed in one of the preceding claims, characterised in that the filling of the collecting container (A1) includes pulverulent pyrophoric uranium as the adsorbent material and coarser bodies of a good thermally-conducting material as the filling bodies.

10. Apparatus as claimed in claim 1 or 9, characterised in that the filling of the collecting container includes spherical filling bodies.

11. Apparatus as claimed in claim 10, characterised in that the spherical filling bodies comprise stainless steel.

12. Apparatus as claimed in claim 1 or 9, characterised in that the filling of the collecting container includes bimetallic filling bodies.

13. Apparatus as claimed in claim 12, characterised in that the bimetallic filling bodies have the shape of spirals or helices.

14. Apparatus as claimed in one of the preceding claims, characterised in that the collecting container is provided with a heating device.

## Revendications

1. Dispositif fonctionnant selon le principe de la chromatographie gazeuse pour la séparation d'isotopes de l'hydrogène qui sont contènus dans un mélange gazeux, avec un circuit de gaz porteur qui contient une pompe à circulation (MP), au moins une colonne de séparation (K1), avec un garnissage qui contient une matière active de séparation en fines particules, au moins un récipient collecteur (A1) commandé par un dispositif à soupapes pouvant être mis dans le circuit, comportant un garnissage de matière adsorbant l'hydrogène, ainsi qu'un dispositif à soupapes pour la commande du processus de séparation, caractérisé en ce que le garnissage des colonnes de séparation contient une matière de séparation non métallique en fines particules, dans laquelle sont distribués uniformément des corps de remplissage fibreux inertes en quantité de 5% en poids au plus et/ou en ce que le garnissage des récipients collecteurs contient encore, outre la matière adsorbant l'hydrogène, des corps de remplissage en matière bonne conductrice de la chaleur.

2. Dispositif selon la revendication 1, caractérisé en ce que les fibres consistent en dioxyde de silicium.

3. Dispositif selon la revendication 1 ou 2, caractérisé en ce que la matière de séparation est de l'oxyde d'aluminium.

4. Dispositif selon la revendication 3, caractérisé en ce que la matière active de séparation est de l'oxyde d'aluminium $\gamma$ d'une teneur en eau d'environ 1% en poids.

5. Dispositif selon l'une des revendications 1 à 4, caractérisé en ce que les fibres ont un diamètre moyen d'environ 0,1 mm et une longueur moyenne de 2 mm et en ce que la matière de séparation consiste en particules d'une dimension comprise entre 60 et 210 µm.

6. Dispositif selon l'une des revendications 1 à 5, caractérisé en ce que la proportion des fibres est de 0,5 à 2% en poids de la matière de séparation.

7. Dispositif selon l'une des revendications 1 à 6, caractérisé en ce que la matière de séparation est placée dans un tube de cuivre.

8. Dispositif selon la revendication 1 ou 7, caractérisé en ce que la matière de séparation est placée dans un tube d'un diamètre d'environ 50 mm.

9. Dispositif selon l'une des revendications précédentes, caractérisé en ce que la matière de garnissage du récipient collecteur (A1) contient de l'uranium pyrophorique en poudre comme matière adsorbante et des corps plus grossiers en une matière bonne conductrice de la chaleur comme corps de remplissage.

10. Dispositif selon la revendication 1 ou 9, caractérisé en ce que le garnissage du récipient récepteur contient des corps de remplissage de forme sphérique.

11. Dispositif selon la revendication 10, caractérisé en ce que les corps de remplissage de forme sphérique consistent en acier inoxydable.

12. Dispositif selon la revendication 1 ou 9, caractérisé en ce que le garnissage du récipient récepteur contient des corps de remplissage bimétalliques.

13. Dispositif selon la revendication 12, caractérisé en ce que les corps de remplissage bimétalliques ont la forme de spirales ou d'hélices.

14. Dispositif selon l'une des revendications précédentes, caractérisé en ce que le récipient récepteur est muni d'un dispositif chauffant.

Fig. 1

Fig.1a

Fig. 2    Prinzip der Umspeicherung